# EUROPÄISCHE PATENTSCHRIFT

(11) **EP 2 810 549 B1**
(45) Veröffentlichungstag und Bekanntmachung des Hinweises auf die Patenterteilung: **10.01.2018**
(21) Anmeldenummer: 14158494.6
(22) Anmeldetag: 10.03.2014
(51) Int. Cl.: A01D 41/12

(54) **Mähdrescher**
Combine harvester
Moissonneuse-batteuse

(30) Priorität: 06.06.2013 DE 102013105836
(43) Veröffentlichungstag der Anmeldung: 10.12.2014
(73) Patentinhaber: CLAAS Selbstfahrende Erntemaschinen GmbH, 33428 Harsewinkel (DE)
(72) Erfinder: Brinkmann, Jörn, 33428 Harsewinkel (DE); Niermann, Martin, 33428 Harsewinkel (DE); Beulke, Christian, 33428 Harsewinkel (DE)

(56) Entgegenhaltungen:
- EP-A1- 0 727 135
- EP-A1- 1 269 822
- EP-A1- 1 328 145
- US-A1- 2005 282 602
- US-A1- 2009 042 625

## Beschreibung

Die vorliegende Erfindung betrifft einen Mähdrescher gemäß dem Oberbegriff des Anspruches 1.

Ein Mähdrescher der eingangs genannten Art ist aus der EP 1 328 145 A1 bekannt. Der aus der EP 1 328 145 A1 bekannte Mähdrescher weist ein Häckselaggregat auf, welchem eine als Radialverteiler ausgeführte Austragvorrichtung zur Ausbringung von gehäckseltem Stroh auf den Boden nachgeordnet ist. Weiterhin umfasst der Mähdrescher eine Spreuverteilvorrichtung, der Spreu von einer Reinigungsvorrichtung des Mähdreschers zugeführt wird. Die Austragrichtung der Spreuverteilvorrichtung ist veränderbar, um an unterschiedliche Betriebssituationen des Mähdreschers, Häckseln von Stroh oder Schwadablage, angepasst zu werden. Die Spreuverteilvorrichtung weist zwei Spreuverteiler auf, deren Austragrichtung derart positionierbar ist, dass die beiden Spreuverteiler die Spreu zu einem Gutstrom bündeln und diesen direkt an die Radialverteiler abgeben, welche die Spreu gemeinsam mit dem gehäckselten Stroh ausbringen. Bei der Schwadablage lassen sich die Spreuverteiler derart positionieren, dass die Spreu beabstandet zu der Schwad von den Spreuverteilern seitlich des Mähdreschers ausgebracht wird. Der Mähdrescher gemäß der EP 1 328 145 A1 ermöglicht vielfältige Betriebsvarianten von Spreuverteilern und Radialverteilern. Die Einstellung einer Betriebsvariante obliegt der Bedienperson des Mähdreschers. Die EP 1 328 145 A1 enthält keinen Hinweis darauf, wie sich eine Änderung der Betriebssituation des Mähdreschers, das heißt der Wechsel vom Häckselbetrieb zum Schwadablagebetrieb und umgekehrt, auf das Häckselaggregat sowie die Radialverteiler und Spreuverteiler auswirkt.

Ausgehend von dem vorgenannten Stand der Technik liegt der Erfindung die Aufgabe zu Grunde, den Mähdrescher der eingangs genannten Art derart weiterzubilden, dass dieser effizienter betreibbar ist.

Dies wird erfindungsgemäß durch die kennzeichnenden Merkmale des Anspruches 1 erreicht.

Vorteilhafte Weiterbildungen der Erfindung sind Gegenstand der Unteransprüche.

Gemäß dem Anspruch 1 wird vorgeschlagen, dass die Austragrichtung der ersten Austragvorrichtung von dem Betriebszustand des Häckselaggregates abhängig ist, wobei bei einem Wechsel des Betriebszustandes, einem Zu- oder Abschalten des Häckselaggregates, die Austragrichtung der ersten Austragvorrichtung automatisch verändert wird. Eine Bedienperson des Mähdreschers wird dadurch davon entlastet, darauf achten zu müssen, ob die zweite Austragvorrichtung in ihrer zweiten Position von der ersten Austragvorrichtung unbeabsichtigt mit Erntegut beschickt wird, welches die zweite Austragvorrichtung auf Grund ihrer Positionierung nicht annehmen und verarbeiten kann.

Vorzugsweise kann das Häckselaggregat in der zweiten Position der zweiten Austragvorrichtung von einem Antrieb entkoppelt sein. Hierdurch kann der Energiebedarf des Mähdreschers reduziert werden, wenn sich die zweite Austragvorrichtung in ihrer zweiten Position befindet, das heißt, wenn das Häckselaggregat sowie die zweite Austragvorrichtung des Mähdreschers für eine Schwadablage eingestellt sind.

Zudem kann auch die zweite Austragvorrichtung in ihrer zweiten Position von einem Antriebsstrang entkoppelt sein. Somit trägt diese Maßnahme ebenfalls zu einer Energieeffizienzsteigerung bei.

Vorteilhafterweise kann die Austragrichtung der ersten Austragvorrichtung in der ersten Position der zweiten Austragvorrichtung in Richtung der zweiten Austragvorrichtung weisen, während die erste Austragvorrichtung in der zweiten Position der zweiten Austragvorrichtung eine seitlich nach außen gerichtete Austragrichtung aufweist. Weist die Austragrichtung der ersten Austragvorrichtung in Richtung der zweiten Austragvorrichtung, so kann dieser von der ersten Austragvorrichtung ein gebündelter Erntegutstrom zugeführt werden. Ist die Austragrichtung der ersten Austragvorrichtung seitlich nach außen gerichtet, so kann Erntegut beiderseits des Mähdreschers ausgebracht werden.

Insbesondere kann die Austragrichtung der ersten Austragvorrichtung durch Hydraulikzylinder veränderbar sein. Der Einsatz von Hydraulikzylinder als Betätigungsmittel für die Veränderung der Austragrichtung der Austragvorrichtung ermöglicht eine einfache Integration in den üblicherweise an einem Mähdrescher vorhandenen Hydraulikkreislauf.

Dabei können die Hydraulikzylinder von einem dem Häckselaggregat zugeordneten Hydraulikventil ansteuerbar sein. Mit dem Hydraulikventil kann das An- und Abschalten des hydraulisch angetriebenen Häckselaggregates angesteuert werden und mit diesem auch die Austragrichtung der ersten Austragvorrichtung.

Zur Ansteuerung der Hydraulikzylinder der ersten Austragvorrichtung können diese ringseitig permanent mit einem konstanten Druck beaufschlagbar sein, während die Hydraulikzylinder kolbenseitig durch das Schalten des Hydraulikventils mit einem höheren Druck beaufschlagbar sind. Durch das Schließen des Hydraulikventils kann auf der Ringseite der Hydraulikzylinder ein höherer Druck als auf der Kolbenseite anliegen, so dass die Hydraulikzylinder in den Kolben eingefahren werden. Mit dem Einfahren der Hydraulikzylinder wird die Austragrichtung der ersten Austragvorrichtung seitlich nach außen, im Wesentlichen quer zur Fahrtrichtung der Erntemaschine gerichtet. Mit dem Öffnen des Hydraulikventils, das heißt der Inbetriebnahme des Häckselaggregates liegt auf der Kolbenseite ein höherer Druck an, so dass die Hydraulikzylinder aus den Kolben ausgefahren werden. Mit dem Ausfahren der Hydraulikzylinder wird die Austragrichtung der ersten Austragvorrichtung in Richtung der zweiten Austragvorrichtung überführt.

Alternativ können die erste Austragvorrichtung und die zweite Austragvorrichtung mechanisch miteinander gekoppelt sein, so dass eine Überführung der zweiten Austrageinrichtung von der ersten Position in die zweite Position und umgekehrt, zu einer Änderung der Austragrichtung der ersten Austrageinrichtung führt. Hierzu können die erste und die zweite Austragvorrichtung durch eine Hebelanordnung miteinander verbunden sein, durch welche bei einer Überführung der zweiten Austragvorrichtung aus ihrer ersten Position in die zweite Position oder umgekehrt, die Austragrichtung der ersten Austragvorrichtung veränderbar ist.

In bevorzugter Weiterbildung kann die zweite Austragvorrichtung als ein Paar Radialverteiler ausgeführt sein.

Insbesondere kann die erste Austragvorrichtung als ein Paar gegensinnig rotierender Spreuverteiler ausgeführt sein.

Des Weiteren kann die erste Austragvorrichtung von einer Reinigungseinrichtung des Mähdreschers mit Erntegut beschickbar sein.

Die vorliegende wird anhand eines in den Zeichnungen dargestellten Ausführungsbeispieles näher erläutert.

Es zeigen:
- Fig. 1: eine schematische Seitenansicht eines Mähdreschers;
- Fig. 2: eine schematische Seitenansicht des rückwärtigen Bereiches des Mähdreschers gemäß Fig. 1 im Häckselbetrieb mit einer teilweise freigeschnittenen Ansicht eines Häckselaggregates sowie einer zweiten Austragvorrichtung;
- Fig. 3: eine Ansicht einer ersten Austragvorrichtung gemäß Fig. 2 von schräg unten;
- Fig. 4: eine schematische Seitenansicht des rückwärtigen Bereiches der Erntemaschine gemäß Fig. 1 im Schwadablagebetrieb;
- Fig. 5: eine Ansicht der ersten Austragvorrichtung gemäß Fig. 4 von schräg unten;
- Fig. 6: eine schematische Darstellung eines Hydrauliksystems zur Ansteuerung der ersten Austragvorrichtung.

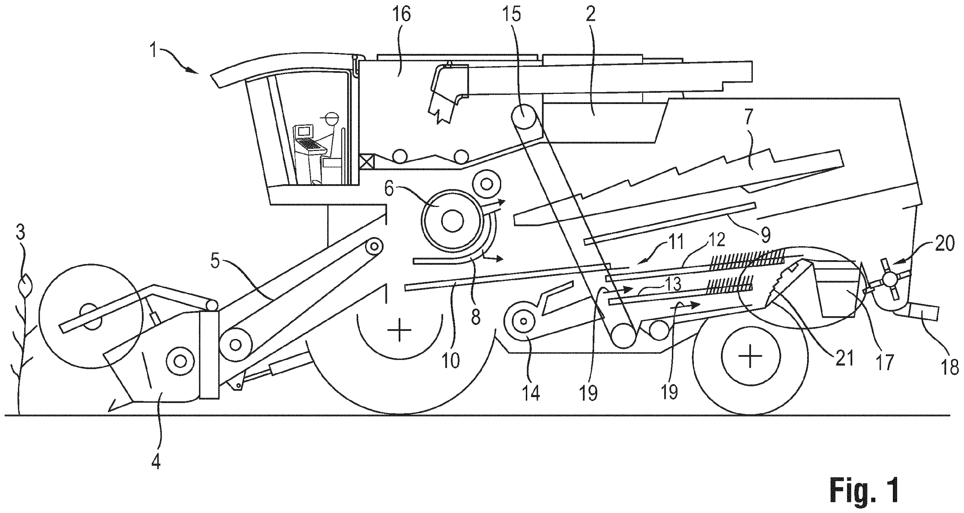

Die Fig.1 zeigt in schematischer Darstellung eine selbstfahrende landwirtschaftliche Erntemaschine 1, welche zur Aufnahme und zur Verarbeitung des Erntegutes 3 dient. Bei der selbstfahrenden landwirtschaftlichen Erntemaschine 1 handelt es sich um einen Mähdrescher 2, der mit einem Schneidwerk 4 ausgestattet ist, welches mit Hilfe des Schrägförderers 5 das Erntegut 3 einer eine Dreschtrommel 6 sowie einen Dreschkorb 8 aufweisenden Dreschvorrichtung zuführt, an die sich eine als Hordenschüttler 7 ausgeführte Abscheidevorrichtung anschließt. Unterhalb des Dreschkorbes 8 und des Hordenschüttlers 7 befindet sich ein Rücklaufboden 9 und eine Rücklaufvorrichtung 10, die ausgeschiedenes Erntegut 3 einer Reinigungseinrichtung 11, bestehend aus Ober 12- und Untersieb 13, zuführt. Das Obersieb 12 und das Untersieb 13 werden über ein Reinigungsgebläse 14 mit einem Luftstrom 19, welcher durch und über die Siebe 12,13 strömt, beaufschlagt. Das gereinigte Erntegut 3 gelangt über einen Kornelevator 15 in einen Korntank 16 und wird dort gesammelt. Ein mittels des Hordenschüttlers 7 geförderter Erntegutanteil, wie beispielsweise Stroh, ist über den hinteren Teil des Mähdreschers einem Häckselaggregat 20 zuführbar.

Die von dem Obersieb 12 und Untersieb 13 durch die Bewegung derselben und den Luftstrom 19 zum hinteren Ende des Mähdreschers 2 transportierten Erntegutanteile, wie beispielsweise Spreu, werden einer ersten Austragvorrichtung 17, die als Spreu-Wurfgebläse ausgeführt ist, zugeführt. Das von dem Häckselaggregat 20 zerkleinerte Erntegut wird von diesem einer zweiten Austragvorrichtung 18, die als Radialverteiler ausgeführt ist, zugeführt, die die Erntegutanteile auf dem Feldboden über die Breite des Schneidwerkes 4 verteilt. Das von der ersten Austragvorrichtung 17 und von der Reinigungsvorrichtung 11 zugeführte Erntegut kann gemeinsam mit dem von dem Häckselaggregat 20 kommenden Erntegut der zweiten Austragvorrichtung 18 zur Verteilung auf dem Feldboden zugeführt werden. Die erste Austragvorrichtung 17 und die zweite Austragvorrichtung 18 sind jeweils paarweise ausgebildet, wobei jeweils ein Paar spiegelbildlich nebeneinander angeordnet ist. In ihrem konstruktiven Aufbau sind die jeweiligen Paare identisch ausgeführt, so dass nachfolgend jeweils nur eine der paarweise angeordneten Austragvorrichtungen 17, 18 beschrieben wird. Durch die Darstellung in der Seitenansicht ist jeweils nur eine der ersten und der zweiten Austragvorrichtungen 17, 18 sichtbar dargestellt.

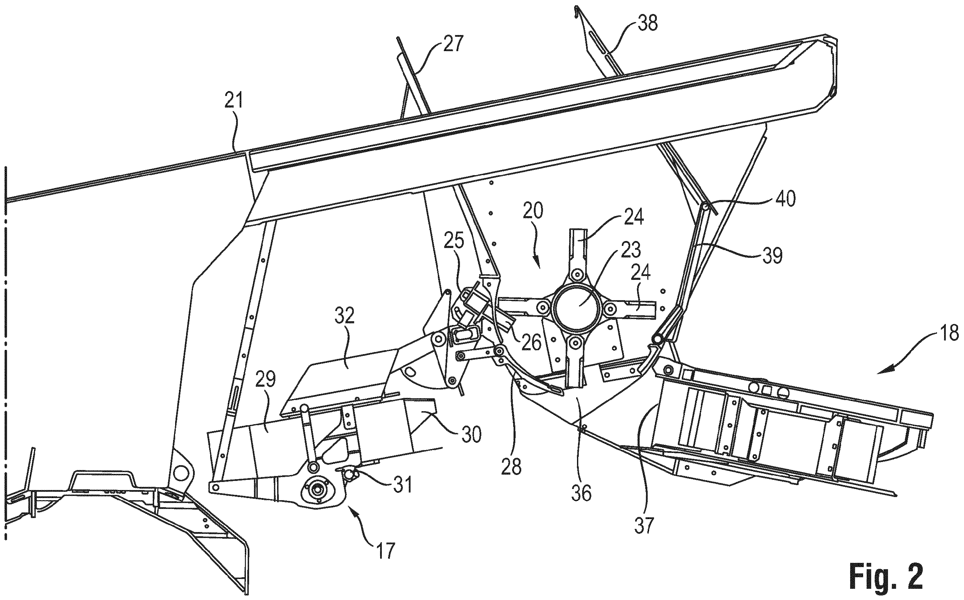

Alternativ ist der Mähdrescher 2 betreibbar, das ausgedroschene Stroh als Schwad auf dem Feldboden abzulegen. Hierzu wird das von dem Hordenschüttler 7 abgegebene Stroh unter Umgehung des Häckselaggregates 20 und der zweiten Austragvorrichtung 18 auf dem Feldboden abgelegt. Dabei nimmt die zweite Austragvorrichtung 18 in Abhängigkeit von der Betriebsart des Mähdreschers 2, Häckselbetrieb oder Schwadablagebetrieb, unterschiedliche Positionen ein, die nachfolgend anhand der Fig. 2 bis 6 beschrieben werden. Das als Schwad auf dem Feldboden abgelegte Stroh kann anschließend von einer Ballenpresse aufgenommen werden.

Die Darstellung in Fig. 2 zeigt eine schematische Seitenansicht des rückwärtigen Bereiches der Erntemaschine gemäß Fig. 1 im Häckselbetrieb in einer teilweise freigeschnittenen Ansicht des Häckselaggregates 20 sowie der zweiten Austragvorrichtung 18 dargestellt. Die Ansicht in Fig. 2 zeigt einen Rahmen 21 des Mähdreschers 2, an dem verschiedene Komponenten des Mähdreschers 2 befestigbar sind. Der Strohhäcksler 20 umfasst zwei parallel zueinander angeordnete Seitenwände 22, zwischen denen eine mit Schlegelmessern 24 bestückte Messertrommel 23 rotierend antreibbar angeordnet ist. Koaxial zu der Messertrommel 23 ist ein Messerträger 25 mit daran befestigten Gegenmessern 26 angeordnet. Oberhalb der Messertrommel 23 ist ein Häckslereinfallblech 27 angeordnet, über welches das von der Abscheidevorrichtung 7 abgegebene Erntegut, im Wesentlichen ausgedroschenes Stroh, dem Häckselaggregat 20 zugeführt wird. Das gehäckselte Erntegut wird über einen Boden 28 durch eine Gutaustrittöffnung 36 in Richtung einer Guteintrittsöffnung 37 der zweiten Austragvorrichtung 18 umgelenkt.

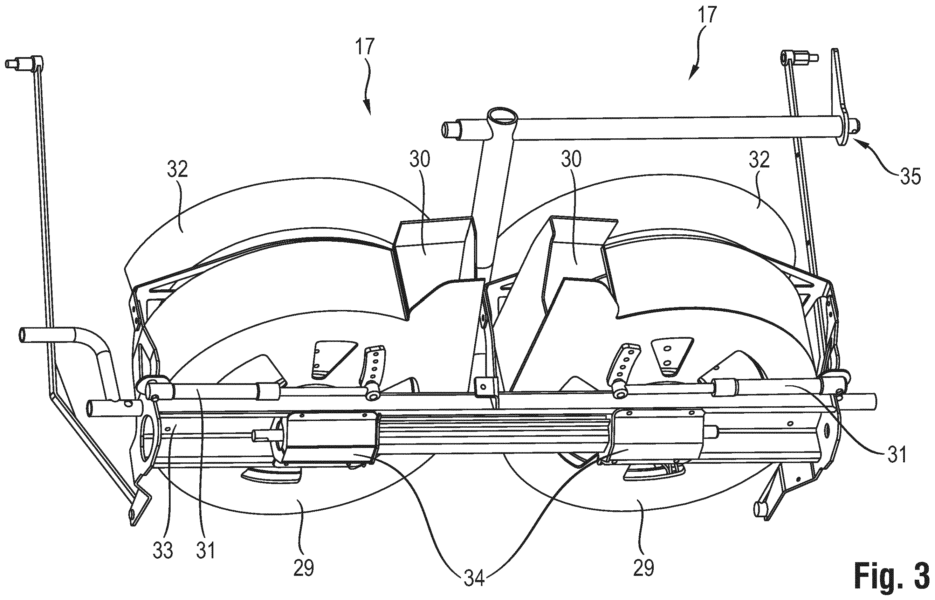

Weiterhin zeigt die Darstellung in Fig. 3 eine dem Häckslereinfallblech 27 gegenüberliegende obere Klappe 38 und eine durch eine Drehachse 40 schwenkbar an dieser angelenkte untere Klappe 39, die der Umlenkung des von der Abscheidevorrichtung 7 abgegebenen Erntegutes an dem Häckselaggregat 20 vorbei bei Betrieb des Mähdreschers 2 im Schwadablagebetrieb dienen.

Der Reinigungseinrichtung 11 ist die erste Austragvorrichtung 17 nachgeordnet, die von der Reinigungsvorrichtung 11 abgegebenes Erntegut annimmt, um dieses in Abhängigkeit von der Betriebsart des Mähdreschers 2 entweder direkt an die zweite Austragvorrichtung 18 weiterzuleiten oder seitlich des Mähdreschers 2 auf den Feldboden auszubringen. Die Austragrichtung der ersten Austragvorrichtung 17 ist entsprechend der Betriebsart des Mähdreschers 2 einstellbar. Hierzu weist die erste Austragvorrichtung 17 ein Gehäuse 29 auf, welches einen nicht näher dargestellten Läufer in seinem Inneren aufweist. Auf der Oberseite der ersten Austragvorrichtung 17 ist ein als Gummituch ausgeführtes Begrenzungselement 32 angeordnet, welches verhindert, dass das von der Reinigungsvorrichtung 11 über die erste Austragvorrichtung 17 hinaus gefördert wird und somit nicht auf die Läufer der ersten Austragvorrichtung 17 gelangt. Auf der Unterseite der Austragvorrichtung 17 befindet sich ein Hydraulikzylinder 31, der der Änderung der Austragrichtung der ersten Austragvorrichtung 17 dient. Das Gehäuse 29 weist eine Austragöffnung 30 auf, die in der dargestellten Betriebsart des Mähdreschers, dem Häckselbetrieb, dem Häckselaggregat 18 zugewandt ist.

Die Darstellung in Fig. 3 zeigt eine Ansicht der ersten Austragvorrichtung 17 von schräg unten. Dieser Darstellung ist die spiegelbildliche Anordnung der als Paar ausgeführten ersten Austragvorrichtung 17 zu entnehmen. Auf der Unterseite der Gehäuse 29 ist ein Rahmenelement 33 angeordnet, welches den vorzugsweise hydraulischen Antrieb 34 der jeweiligen ersten Austragvorrichtung 17 trägt. Die Kolbenstangen der Hydraulikzylinder 31 befinden sich in ausgefahrener Stellung. Die Austragvorrichtungen 17 sind über eine Aufhängung 35 mit dem Rahmen 21 verbunden.

Die zweite Austragvorrichtung 18 ist in Förderrichtung des Erntegutsstromes gesehen dem Häckselaggregat 20 nachgeordnet. In der in Fig. 2 dargestellten Betriebsart des Mähdreschers 2 wird die zweite Austragvorrichtung 18 sowohl von dem Häckselaggregat 20 als auch von der ersten Austragvorrichtung 17 mit Erntegut beaufschlagt. Der Gutübergang des von dem Häckselaggregat 20 abgegebenen Erntegutes an die jeweilige nachgeordnete zweite Austragvorrichtung 18 erfolgt im Wesentlichen ohne Richtungsänderung. Die Gutaustrittsöffnung des Häckselaggregates 20 und die Guteintrittsöffnung der jeweiligen zweiten Austragvorrichtung 18 liegen in der gleichen Ebene. Das durch die Austragöffnung 31 der jeweiligen ersten Austragvorrichtung 17 abgegeben Erntegut gelangt durch die Guteintrittsöffnung 37 in die zweite Austragvorrichtung 18.

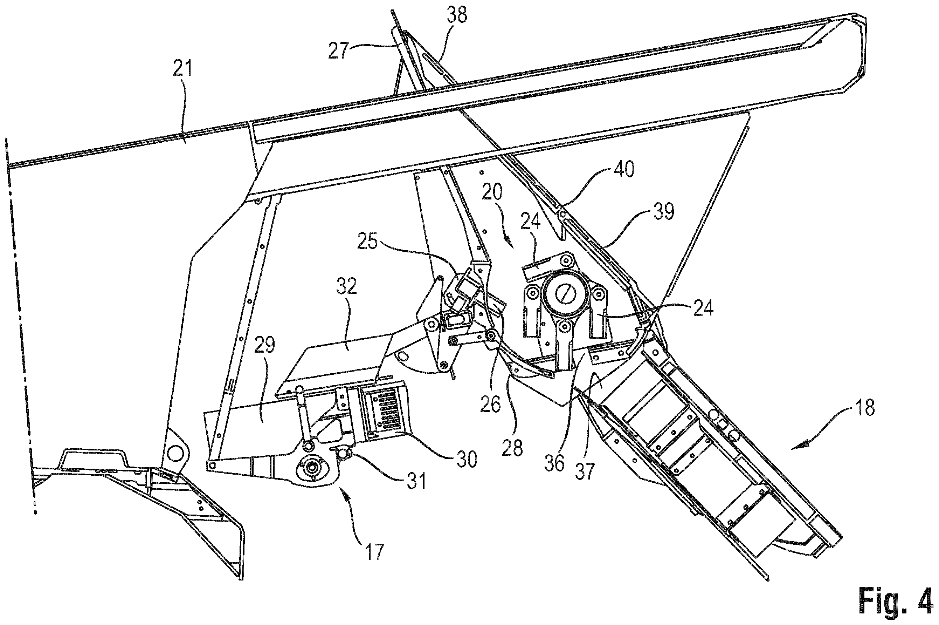

In Fig. 4 ist eine schematische Seitenansicht des rückwärtigen Bereiches der Erntemaschine 1 gemäß Fig. 1 im Schwadablagebetrieb dargestellt. Die Darstellung unterscheidet sich von der in Fig. 2 dadurch, dass die zweite Austragvorrichtung 18 in eine Stellung überführt ist, in der das auszutragende Erntegut unter Umgehung des Häckselaggregates 20 sowie der zweiten Austragvorrichtung 18 auf den Boden hinter dem Mähdrescher 2 in Form eines Schwads ablegbar ist. Die weiter oben anhand der Fig. 2 beschriebene untere Klappe 39 ist in eine Position relativ zu der oberen Klappe 38 überführt, in der diese im Wesentlichen zueinander fluchtend ausgerichtet sind. Zusätzlich ist die zweite Austragvorrichtung 18 um eine Achse schwenkbar an den Seitenwänden 22 angeordnet, so dass die Oberfläche der zweiten Austragvorrichtung 18 sich nahezu parallel zu der oberen und unteren Klappe 38, 39 erstreckt und sich an die untere Klappe 39 anschließt. Auf diese Weise entsteht eine durchgehende geneigte Fläche, auf der das von der Abscheidevorrichtung 7 abgegebene Erntegut an dem Häckselaggregat 20 vorbei auf dem Feldboden ausbringbar ist. Gleichzeitig wird die jeweilige erste Austragvorrichtung 17 in eine Position überführt, in der die Austragöffnung 30 der jeweiligen Austragvorrichtung 17 eine seitlich nach außen gewandte Austragrichtung aufweisen. Das von der Reinigungseinrichtung 11 an die jeweilige zweite Austragvorrichtung 17 abgegebene Erntegut, insbesondere Spreu, wird jeweils im Wesentlichen quer zur Fahrtrichtung des Mähdreschers 2 zu beiden Seiten ausgebracht.

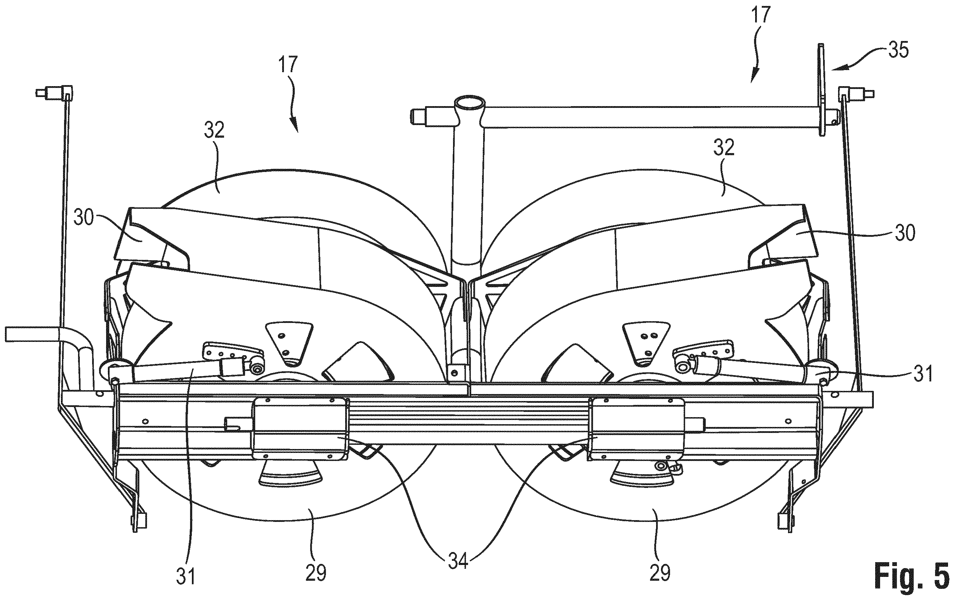

Die Darstellung in Fig. 5 zeigt eine Ansicht der ersten Austragvorrichtung gemäß Fig. 4 von schräg unten. Wie aus dieser Ansicht klar zu entnehmen ist, weisen die Austragöffnung 30 der jeweiligen Austragvorrichtung 17 seitlich nach außen. Die Änderung der Austragrichtung resultiert aus dem Einfahren der Hydraulikzylinder 31, wodurch die jeweilige erste Austragvorrichtung 17 um ihre Antriebsachse geschwenkt wird.

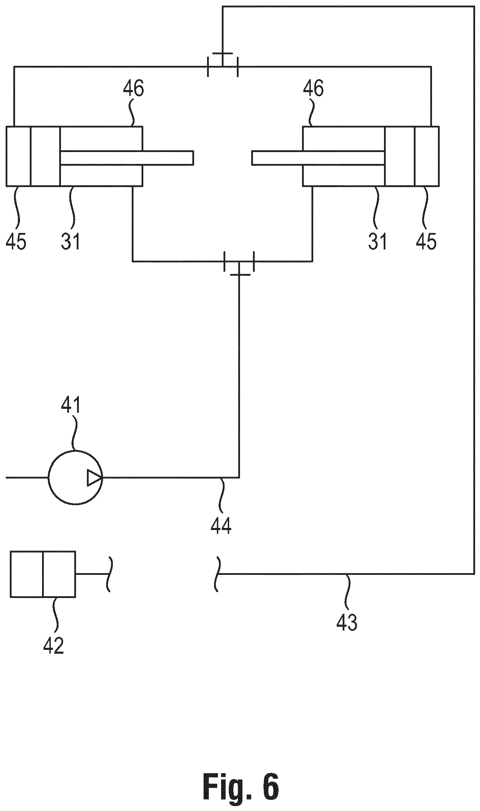

Um sicherzustellen, dass die Austragrichtung der ersten Austragvorrichtung 17 nur dann veränderbar ist, wenn von dem Häckselbetrieb auf den Schwadablagebetrieb umgeschaltet wird, ist es vorgesehen, die Hydraulikzylinder 31 mit dem Hydraulikreislauf des Häckselaggregates 20 zu koppeln. Fig. 6 zeigt eine schematische Darstellung eines Hydrauliksystems zur Ansteuerung der ersten Austragvorrichtung 17. Das Hydrauliksystem umfasst einen Hochdruckkreislauf 43, der über ein Hydraulikventil 42 schaltbar ist, sowie einen Niederdruckkreislauf 44, der von einer Pumpe 41 permanent gespeist wird, so dass hier ein konstanter Druck aufrechterhalten wird. Wie aus der Darstellung der Fig. 6 ersichtlich, sind die Hydraulikzylinder 31 auf ihrer Ringseite 46 permanent mit einem konstanten Druck aus dem Niederdruckkreislauf 44 beaufschlagt. Auf der Kolbenseite 45 werden die Hydraulikzylinder 31 können die Hydraulikzylinder 31 mit dem hohen Druck aus dem Hochdruckkreislauf 43 beaufschlagt werden, der jedoch nur ansteht, wenn das hydraulisch angetriebene Ringseite 46, so dass die Hydraulikzylinder 31 ausgefahren werden. Somit weist die jeweilige Austragvorrichtung 17 eine Austragrichtung auf, die der jeweiligen Guteintrittsöffnung der zweiten Austragvorrichtung 18 zugewandt ist.

Mit dem Abschalten des Häckselaggregates 20 im Schwadablagebetrieb des Mähdreschers 2, das heißt dem Schließen des Hydraulikventils 42, entfällt der kolbenseitige Gegendruck, so dass die Hydraulikzylinder 31 auf Grund des permanent anstehenden ringseitigen Druckes automatisch eingefahren werden. Hierdurch wird die Austragrichtung der ersten Austragvorrichtung 17 zwangsgeführt verändert. Um den Energieverbrauch des Mähdreschers 2 im Schwadablagebetrieb zu reduzieren, wird neben dem Häckselaggregat 20 auch die zweite Austragvorrichtung 18 abgeschaltet.

**Bezugszeichenliste**

| | | | |
|---|---|---|---|
| **1** | Erntemaschine | **32** | Begrenzungselement |
| **2** | Mähdrescher | **33** | Rahmenelement |
| **3** | Erntegut | **34** | Antrieb |
| **4** | Schneidwerk | **35** | Aufhängung |
| **5** | Schrägförderer | **36** | Gutaustrittsöffnung |
| **6** | Dreschtrommel | **37** | Guteintrittsöffnung |
| **7** | Hordenschüttler | **38** | Obere Klappe |
| **8** | Dreschkorb | **39** | Untere Klappe |
| **9** | Rücklaufboden | **40** | Drehachse |
| **10** | Rücklaufvorrichtung | **41** | Pumpe |
| **11** | Reinigungseinrichtung | **42** | Hydraulikventil |
| **12** | Obersieb | **43** | Hochdruckkreislauf |
| **13** | Untersieb | **44** | Niederdruckkreislauf |
| **14** | Reinigungsgebläse | **45** | Kolbenseite |
| **15** | Kornelevator | **46** | Ringseite |
| **16** | Korntank | | |
| **17** | Erste Austragvorrichtung | | |
| **18** | Zweite Austragvorrichtung | | |
| **19** | Luftstrom | | |
| **20** | Häckselaggregat | | |
| **21** | Rahmen | | |
| **22** | Seitenwand | | |
| **23** | Messertrommel | | |
| **24** | Schlegelmesser | | |
| **25** | Messerträger | | |
| **26** | Gegenmesser | | |
| **27** | Häckslereinfallblech | | |
| **28** | Boden | | |
| **29** | Gehäuse | | |
| **30** | Austragöffnung | | |
| **31** | Hydraulikzylinder | | |

## Patentansprüche

1. Mähdrescher (2), umfassend eine erste Austragvorrichtung (17) mit veränderbarer Austragrichtung, ein Häckselaggregat (20) zur Zerkleinerung von Stroh sowie eine dem Häckselaggregat (20) nachgeordnete, in zumindest zwei unterschiedliche Positionen überführbare zweite Austragvorrichtung (18), welche in der ersten Position durch das Häckselaggregat (20) und die erste Austragvorrichtung (17) mit Erntegut beschickbar ist, und welche in der zweiten Position die Ausbringung von Erntegut unter Umgehung der zweiten Austragvorrichtung (18) ermöglicht, **dadurch gekennzeichnet, dass** die Austragrichtung der ersten Austragvorrichtung (17) von dem Betriebszustand des Häckselaggregates (20) abhängig ist, wobei bei einem Wechsel des Betriebszustandes, das heisst einem Zu- oder Abschalten des Häckselaggregates (20), die Austragrichtung der ersten Austragvorrichtung (17) automatisch veränderbar ist.

2. Mähdrescher (2) nach Anspruch 1, **dadurch gekennzeichnet, dass** das Häckselaggregat (20) in der zweiten Position der zweiten Austragvorrichtung (18) von einem Antrieb entkoppelbar ist.

3. Mähdrescher (2) nach einem der Ansprüche 1 oder 2, **dadurch gekennzeichnet, dass** die zweite Austragvorrichtung (18) in ihrer zweiten Position von einem Antrieb entkoppelbar ist.

4. Mähdrescher (2) nach einem der Ansprüche 1 bis 3, **dadurch gekennzeichnet, dass** die Austragrichtung der ersten Austragvorrichtung (17) in der ersten Position der zweiten Austragvorrichtung (18) in Richtung der zweiten Austragvorrichtung (18) weist, und dass die erste Austragvorrichtung (17) in der zweiten Position der zweiten Austragvorrichtung (18) eine seitlich nach außen gerichtete, der zweiten Austragvorrichtung (18) abgewandte Austragrichtung einnimmt.

5. Mähdrescher (2) nach einem der Ansprüche 1 bis 4, **dadurch gekennzeichnet, dass** die Austragrichtung der ersten Austragvorrichtung (17) durch Hydraulikzylinder (31) veränderbar ist.

6. Mähdrescher (2) nach Anspruch 5, **dadurch gekennzeichnet, dass** die Hydraulikzylinder (31) von einem dem Häckselaggregat (20) zugeordneten Hydraulikventil (42) ansteuerbar sind.

7. Mähdrescher (2) nach Anspruch 6, **dadurch gekennzeichnet, dass** die Hydraulikzylinder (31) ringseitig permanent mit einem konstanten Druck beaufschlagbar sind und kolbenseitig durch Schalten des Hydraulikventils (42) mit einem höheren Druck beaufschlagbar sind.

8. Mähdrescher (2) nach einem der Ansprüche 1 bis 4, **dadurch gekennzeichnet, dass** die erste Austragvorrichtung (17) und die zweite Austragvorrichtung (18) mechanisch miteinander gekoppelt sind, so dass eine Überführung der zweiten Austrageinrichtung (18) von der ersten Position in die zweite Position und umgekehrt, zu einer Änderung der Austragrichtung der ersten Austrageinrichtung (17) führt.

9. Mähdrescher (2) nach Anspruch 8, **dadurch gekennzeichnet, dass** die erste Austragvorrichtung (17) und die zweite Austragvorrichtung (18) durch eine Hebelanordnung miteinander verbunden sind.

10. Mähdrescher (2) nach einem der Ansprüche 1 bis 9, **dadurch gekennzeichnet, dass** die zweite Austragvorrichtung (18) als Radialverteiler ausgeführt ist.

11. Mähdrescher (2) nach einem der Ansprüche 1 bis 10, **dadurch gekennzeichnet, dass** die erste Austragvorrichtung (17) als ein Paar gegensinnig rotierender Spreuverteiler ausgeführt ist.

12. Mähdrescher (2) nach einem der Ansprüche 1 bis 11, **dadurch gekennzeichnet, dass** die erste Austragvorrichtung (17) von einer Reinigungseinrichtung (11) des Mähdreschers (2) mit Erntegut beschickbar ist.

## Claims

1. A combine harvester (2) including a first discharge apparatus (17) having a variable discharge direction, a chopping assembly (20) for cutting up straw and a second discharge apparatus (18) which is arranged downstream of the chopping assembly (20) and which can be moved into at least two different positions and which in the first position can be loaded with crop material by the chopping assembly (20) and the first discharge apparatus (17) and which in the second position permits the discharge of crop material with bypassing of the second discharge apparatus (18),
**characterised in that** the discharge direction of the first discharge apparatus (17) is dependent on the operating state of the chopping assembly (20), wherein upon a change in the operating state, that is to say when the chopping assembly (20) is switched on or switched off, the discharge direction of the first discharge apparatus (17) is automatically variable.

2. A combine harvester (2) according to claim 1 **characterised in that** in the second position of the second discharge apparatus (18) the chopping assembly (20) can be uncoupled from a drive.

3. A combine harvester (2) according to one of claims 1 and 2 **characterised in that** in its second position the second discharge apparatus (18) can be uncoupled from a drive.

4. A combine harvester (2) according to one of claims 1 to 3 **characterised in that** in the first position of the second discharge apparatus (18) the discharge direction of the first discharge apparatus (17) faces in the direction of the second discharge apparatus (18), and in the second position of the second discharge apparatus (18) the first discharge apparatus (17) assumes a laterally outwardly directed discharge direction facing away from the second discharge apparatus (18).

5. A combine harvester (2) according to one of claims 1 to 4 **characterised in that** the discharge direction of the first discharge apparatus (17) is variable by hydraulic cylinders (31).

6. A combine harvester (2) according to claim 5 **characterised in that** the hydraulic cylinders (31) are actuable by a hydraulic valve (42) associated with the chopping assembly (20).

7. A combine harvester (2) according to claim 6 **characterised in that** the hydraulic cylinders (31) can be permanently subjected at the ring end to a constant pressure and can be subjected to a higher pressure at the piston end by switching of the hydraulic valve (42).

8. A combine harvester (2) according to one of claims 1 to 4 **characterised in that** the first discharge apparatus (17) and the second discharge apparatus (18) are mechanically coupled together so that transfer of the second discharge apparatus (18) from the first position into the second position and vice-versa leads to a change in the discharge direction of the first discharge apparatus (17).

9. A combine harvester (2) according to claim 8 **characterised in that** the first discharge apparatus (17) and the second discharge apparatus (18) are connected together by a lever arrangement.

10. A combine harvester (2) according to one of claims 1 to 9 **characterised in that** the second discharge apparatus (18) is in the form of a radial distributor.

11. A combine harvester (2) according to one of claims 1 to 10 **characterised in that** the first discharge apparatus (17) is in the form of a pair of mutually oppositely rotating chaff distributors.

12. A combine harvester (2) according to one of claims 1 to 11 **characterised in that** the first discharge apparatus (17) can be loaded with crop material by a cleaning device (11) of the combine harvester (2).

## Revendications

1. Moissonneuse-batteuse (2) comprenant un premier dispositif d'éjection (17) à direction d'éjection variable, un organe hacheur (20) pour broyer de la paille ainsi qu'un second dispositif d'éjection (18) qui est disposé en aval de l'organe hacheur (20), qui est transférable dans au moins deux positions différentes et qui, dans la première position, est alimenté par l'organe hacheur (20) et par le premier dispositif d'éjection (17) et, dans la seconde position, permet d'évacuer du produit récolté en contournant le second dispositif d'éjection (18), **caractérisée en ce que** la direction d'éjection du premier dispositif d'éjection (17) dépend de l'état de fonctionnement de l'organe hacheur (20), en cas de changement d'état de fonctionnement, c'est-à-dire en cas d'activation ou de désactivation de l'organe hacheur (20), la direction d'éjection du premier dispositif d'éjection (17) étant modifiable automatiquement.

2. Moissonneuse-batteuse (2) selon la revendication 1, **caractérisée en ce que**, dans la seconde position du second dispositif d'éjection (18), l'organe hacheur (20) est découplable d'un moyen d'entraînement.

3. Moissonneuse-batteuse (2) selon une des revendications 1 ou 2, **caractérisée en ce que**, dans sa seconde position, le second dispositif d'éjection (18) est découplable d'un moyen d'entraînement.

4. Moissonneuse-batteuse (2) selon une des revendications 1 à 3, **caractérisée en ce que**, dans la première position du second dispositif d'éjection (18), la direction d'éjection du premier dispositif d'éjection (17) est orientée vers le second dispositif d'éjection (18), et **en ce que**, dans la seconde position du second dispositif d'éjection (18), le premier dispositif d'éjection (17) adopte une direction d'éjection orientée latéralement vers l'extérieur, à l'opposé du second dispositif d'éjection (18) .

5. Moissonneuse-batteuse (2) selon une des revendications 1 à 4, **caractérisée en ce que** la direction d'éjection du premier dispositif d'éjection (17) est modifiable par l'intermédiaire de vérins hydrauliques (31).

6. Moissonneuse-batteuse (2) selon la revendication 5, **caractérisée en ce que** les vérins hydrauliques (31) sont commandés par une soupape hydraulique (42) associée à l'organe hacheur (20) .

7. Moissonneuse-batteuse (2) selon la revendication 6, **caractérisée en ce que**, côté tige, les vérins hydrauliques (31) peuvent être soumis en permanence à une pression constante et, côté piston, peuvent être soumis à une pression supérieure par commutation de la soupape hydraulique (42).

8. Moissonneuse-batteuse (2) selon une des revendications 1 à 4, **caractérisée en ce que** le premier dispositif d'éjection (17) et le second dispositif d'éjection (18) sont couplés entre eux mécaniquement, de sorte qu'un transfert du second équipement d'éjection (18) de la première position vers la seconde position et inversement entraîne une modification de la direction d'éjection du premier équipement d'éjection (17) .

9. Moissonneuse-batteuse (2) selon la revendication 8, **caractérisée en ce que** le premier dispositif d'éjection (17) et le second dispositif d'éjection (18) sont reliés entre eux par l'intermédiaire d'un agencement de leviers.

10. Moissonneuse-batteuse (2) selon une des revendications 1 à 9, **caractérisée en ce que** le second dispositif d'éjection (18) est conçu sous la forme d'un épandeur radial.

11. Moissonneuse-batteuse (2) selon une des revendications 1 à 10, **caractérisée en ce que** le premier dispositif d'éjection (17) est conçu sous la forme d'une paire d'éparpilleurs de balle à sens de rotation opposés.

12. Moissonneuse-batteuse (2) selon une des revendications 1 à 11, **caractérisée en ce que** le premier dispositif d'éjection (17) peut être alimenté en produit récolté par un équipement de nettoyage (11) de la moissonneuse-batteuse (2).
